(19) Europäisches Patentamt / European Patent Office / Office européen des brevets

(11) **EP 2 107 352 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(51) Int Cl.:
***G01H 9/00*** *(2006.01)*     ***G01B 9/02*** *(2006.01)*

(21) Anmeldenummer: **09003437.2**

(22) Anmeldetag: **10.03.2009**

(54) **Vibrometer und Verfahren zur optischen Vermessung eines Objekts**

Vibrometer and method for optically measuring an object

Vibromètre et procédé destinés à la mesure optique d'un objet

(84) Benannte Vertragsstaaten:
**BE DE FR GB**

(30) Priorität: **02.04.2008 DE 102008017119**

(43) Veröffentlichungstag der Anmeldung:
**07.10.2009 Patentblatt 2009/41**

(73) Patentinhaber: **Polytec GmbH**
**76337 Waldbronn (DE)**

(72) Erfinder:
- **Rembe, Christian Dr.**
  **76337 Waldbronn (DE)**
- **Siegmund, Georg Dr.**
  **76307 Karlsbad (DE)**
- **Xu, Tian-Hua Dr.**
  **76307 Karlsbad (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**US-A- 4 633 715**    **US-A- 5 394 233**
**US-A- 5 463 493**    **US-B1- 6 271 924**

- **Martin Johansmann ET AL: "Targeting the Limits of Laser Doppler Vibrometry", , 1. Januar 2005 (2005-01-01), XP055289217, Gefunden im Internet: URL:http://www.polytec.com/fileadmin/user_uploads/Applications/Data_Storage/Documents/LM_TP_Idema_JP_2005_E.pdf [gefunden am 2016-07-18]**
- **BARTEK RAJWA ET AL: "AOTF-based system for image cytometry", OPTICAL SENSING II, Bd. 5694, 23. März 2005 (2005-03-23), Seite 16, XP055288780, 1000 20th St. Bellingham WA 98225-6705 USA ISSN: 0277-786X, DOI: 10.1117/12.591115 ISBN: 978-1-62841-971-9**
- **G Elston: "Optically and Acoustically Rotated Slow Shear Bragg Cells in Te02", Proc. SPIE, 22. August 1988 (1988-08-22), Seiten 95-101, XP055289306, Gefunden im Internet: URL:http://proceedings.spiedigitallibrary.org/proceeding.aspx?articleid=1252591# [gefunden am 2016-07-18]**

**Beschreibung**

Die Erfindung betrifft ein Vibrometer gemäß Oberbegriff des Anspruchs 1 sowie ein Verfahren zur optischen Vermessung eines Objekts gemäß Oberbegriff des Anspruchs 6.

Es ist bekannt, Schwingungen an einem Objekt berührungslos mittels eines Laser-Doppler-Vibrometers zu messen. Ein typisches solches Vibrometer umfasst eine Strahlungsquelle, einen Strahlteiler, eine optische Überlagerungsvorrichtung und einen Detektor.

Ein von der Strahlungsquelle erzeugter Ursprungsstrahl wird mittels des Strahlteilers in einen Mess- und einen Referenzstrahl aufgeteilt. Mittels der optischen Überlagerungsvorrichtung, die aus mehreren optischen Komponenten bestehen kann, wird der Messstrahl auf das Objekt geleitet und der zumindest teilweise von dem zu vermessenden Objekt reflektierte Messstrahl wird wiederum mittels der Überlagerungsvorrichtung zusammen mit dem Referenzstrahl auf den Detektor überlagert, so dass mittels des Detektors ein Überlagerungs- oder Interferenzsignal zwischen Mess- und Referenzstrahl messbar ist.

Durch die Bewegung oder Schwingung der Objektoberfläche wird die Frequenz des Messstrahls beeinflusst, so dass aus dem Überlagerungssignal von Mess- und Referenzstrahl auf die Bewegung des Objekts, insbesondere die Bewegungsgeschwindigkeit oder Schwingungsfrequenz der Objektoberfläche rückgeschlossen werden kann.

Die Strahlungsquelle muss hierbei monochromatische Strahlung erzeugen oder zumindest Strahlung mit einer hinreichend großen Kohärenzlänge. Typischerweise werden Laser als Strahlungsquellen verwendet.

Weiterhin ist bekannt, ein Vibrometer als heterodynes Vibrometer auszuführen. Hierbei wird mittels einer Frequenzverschiebeeinheit ein Frequenzunterschied zwischen Mess- und Referenzstrahl erzeugt. In dem Messsignal des Detektors ergibt sich aus der Überlagerung von Mess- und Referenzstrahl somit ein Messsignal mit einer Trägerfrequenz, welche dem Frequenzunterschied zwischen Mess- und Referenzstrahl entspricht.

Mittels des heterodynen Vibrometers kann nicht nur die Bewegungsgeschwindigkeit, sondern auch die Bewegungsrichtung des zu vermessenden Objekts bestimmt werden. Weiterhin ergeben sich durch die Verwendung eines heterodynen Vibrometers Vorteile bei der Auswertung des Messsignals, insbesondere kann technisches Rauschen im niederfrequenten Bereich isoliert werden.

Aus US 6,271,924 B1 ist ein heterodynes Laser-Vibrometer bekannt.

Aufgrund der aktuellen technischen Entwicklungen insbesondere in der Mikrosystemtechnik ist die Vermessung immer kleinerer Objekte mit immer höheren Schwingungsfrequenzen bzw. Bewegungsgeschwindigkeiten wünschenswert.

Der Erfindung liegt daher die Aufgabe zugrunde, ein Laser-Doppler-Vibrometer zur optischen Schwingungsmessung an einem Objekt und ein Verfahren zur optischen Vermessung eines Objekts zu schaffen, welche die maximal messbare Schwingungsfrequenz bzw. Bewegungsgeschwindigkeit verglichen mit herkömmlichen Vibrometern bzw. Verfahren erhöhen. Weiterhin soll sich das Vibrometer bzw. das Verfahren durch eine kostengünstige Realisierbarkeit und durch Fehlerunanfälligkeit auszeichnen. Ebenfalls soll der Intensitätsverlust zwischen Ursprungsstrahl und Mess- bzw. Referenzstrahl gering sein. Gelöst ist diese Aufgabe durch ein Vibrometer gemäß Anspruch 1 sowie durch ein Verfahren zur optischen Vermessung eines Objekts gemäß Anspruch 6. Vorteilhafte Ausgestaltungen des Vibrometers finden sich in den Ansprüchen 2 bis 5 und vorteilhafte Ausgestaltungen des Verfahrens finden sich in den Ansprüchen 7 bis 11.

Eine wesentliche Grundlage der Erfindung ist, dass die maximal messbare Schwingungsfrequenz bei heterodynen Vibrometern von der Trägerfrequenz, d. h. dem Frequenzunterschied zwischen Mess- und Referenzstrahl abhängt. Je höher die Trägerfrequenz, desto höher die maximal messbare Schwingungsfrequenz.

Das erfindungsgemäße Vibrometer umfasst eine Strahlungsquelle, einen Strahlteiler, eine optische Überlagerungsvorrichtung und einen Detektor.

Der von der Strahlungsquelle erzeugte Ursprungsstrahl trifft auf den Strahlteiler und wird von diesem in einen Mess- und einen Referenzstrahl aufgeteilt. Die Überlagerungsvorrichtung ist derart mit dem Detektor zusammenwirkend ausgestaltet, dass der von dem zu vermessenden Objekt zumindest teilweise reflektierte Messstrahl und der Referenzstrahl auf dem Detektor überlagert sind, so dass mittels des Detektors ein Interferenzsignal aus Mess- und Referenzstrahl messbar ist.

Weiterhin ist das erfindungsgemäße Vibrometer als heterodynes Vibrometer ausgeführt, welches eine optische Frequenzschiebeeinheit umfasst. Diese ist im Strahlengang des Vibrometers angeordnet, so dass zwischen Mess- und Referenzstrahl ein Frequenzunterschied erzeugt wird und sich dementsprechend in dem Interferenzsignal von überlagertem Mess- und Referenzstrahl eine Trägerfrequenz entsprechend dem Frequenzunterschied ergibt.

Wesentlich ist, dass Strahlteiler und Frequenzverschiebeeinheit in einem optischen Bauelement als akustooptischer Modulator ausgeführt sind. Mittels des akustooptischen Modulators findet eine Beugung des Ursprungsstrahls statt, derart, dass mindestens zwei Beugungsstrahlen aus dem akustooptischer Modulator austreten: Ein erster Beugungsstrahl 1. Beugungsordnung sowie ein zweiter Beugungsstrahl -1. Beugungsordnung.

Der akustooptische Modulator ist derart im Strahlengang des Vibrometers angeordnet, dass einer dieser Beugungsstrahlen der Messstrahl und der andere Beugungsstrahl der Referenzstrahl ist. Es ist somit entweder der Messstrahl der Beugungsstrahl 1. Beugungsordnung und der Referenzstrahl der Beugungsstrahl -1. Beugungsordnung oder umgekehrt.

Der Erfindung liegt die Erkenntnis der Anmelderin zugrunde, dass durch Verwendung der Beugungsstrahlen 1. und -1. Ordnung ein doppelt so hoher Frequenzunterschied zwischen Mess- und Referenzstrahl herstellbar ist, verglichen mit der herkömmlichen Verwendung eines akustooptischen Modulators, der in dem Strahlengang lediglich eines Strahls, beispielsweise des Referenzstrahls angeordnet wird, um dessen Frequenz zu verschieben.

Das erfindungsgemäße Vibrometer ermöglicht somit eine höhere Trägerfrequenz und eine höhere maximal messbare Schwingungsfrequenz. Gleichzeitig ist das erfindungsgemäße Vibrometer durch Verwendung lediglich eines akustooptischen Modulators als Strahlteiler und Frequenzverschiebeeinheit kostengünstig und fehlerunanfällig herstellbar.

Grundsätzlich ist auch die Verwendung höherer Beugungsordnungen denkbar, jedoch weisen schon die Beugungsstrahlen 2. und -2. Ordnung einen wesentlich höheren Intensitätsverlust gegenüber der Intensität des Ursprungsstrahls auf verglichen mit der Verwendung der Beugungsstrahlen 1. und -1. Beugungsordnung.

Vorteilhafterweise ist der akustooptischer Modulator als Braggzelle ausgeführt, d. h. mittels Einkopplung akustischer Wellen in die Braggzelle wird ein gewünschtes Beugungsgitter erzeugt, welches zu dem gewünschten Austritt der Beugungsstrahlen 1. und -1. Beugungsordnung mit vorgegebenem Frequenzunterschied führt.

Die Verwendung eines akustooptischen Modulators zur Erzeugung von Beugungsstrahlen der 1. und -1. Ordnung ist an sich bekannt und beispielsweise in "Acoustooptic TeO2 tunable filter using far-off-axis anisotropic bragg difraction", T. Yano and A. Watanabe, applied optics, vol. 15, no. 9, September 1976" und "AOTF-bases system for image cytometry", Bartec Rajwa et al., Proc. SPIE volume 5694-spectral imaging: instrumentation, applications and analysis III (2005)" beschrieben. Insbesondere ist die Verwendung von TeO$_2$ als Material für den akustooptischen Modulator vorteilhaft.

Weiterhin ist es vorteilhaft, den akustooptischen Modulator derart auszuführen, dass er im "slow shear mode" arbeitet. Diese an sich bekannte Verwendung eines akustooptischen Modulators sieht die Einkopplung akustischer Wellen in den akustooptischen Modulator vor, welche nicht zu einer periodischen Pressung der Kristallstruktur des akustooptischen Modulators führt, sondern zu einer Scherung. Hierdurch ist die Erzeugung eines gewünschten Beugungsgitters in dem akustooptischen Modulator durch Einkopplung von akustischen Wellen mit geringerer Leistung möglich, so dass ein kostengünstigerer und robusterer Aufbau erreicht werden kann.

Vorteilhafterweise ist die Strahlungsquelle derart ausgeführt, dass sie einen monochromatischen Strahl einer vorgegebenen Ausgangswellenlänge erzeugt oder zumindest einen Strahl mit einer vorgegebenen Mindestkohärenzlänge.

Vorzugsweise ist die Strahlungsquelle als Laser ausgeführt, insbesondere als DPSS-Laser (diode pumped solid state laser), vorteilhafterweise mit einer Wellenlänge von 532 nm. Insbesondere ist die Verwendung eines DPSS-Nd:Yag-Lasers vorteilhaft, bei dem die Standardwellenlänge des erzeugten Lichstrahls von 1064 nm mittels eines Verdopplungskristalls auf 532 nm reduziert wird.

Um eine optimale Intensität für Mess- und Referenzstrahl zu erreichen, ist der akustooptische Modulator derart ausgeführt, dass der optimale Einfallswinkel des Ursprungsstrahls für eine maximale Intensität des Beugungsstrahls 1. Ordnung identisch zu dem optimalen Einfallswinkel des Ursprungsstrahls für eine maximale Intensität des Beugungsstrahls -1. Ordnung ist, wobei diese Optimierung zumindest für die Wellenlänge des einfallenden Ursprungsstrahls gilt. Auf diese Weise ist eine optimierte Intensität von Mess- und Referenzstrahl gewährleistet.

Vorteilhafterweise umfasst das Vibrometer eine Auswerteeinheit, zur Auswertung der Messsignale des Detektors.

Mit dem erfindungsgemäßen Vibrometer sind hohe Schwingungsfrequenzen messbar, dies erfordert jedoch bei einer digitalen Auswertung der Messsignale des Detektors eine entsprechend hohe Abtastrate.

Es ist daher insbesondere vorteilhaft, wenn die Auswertung der Messsignale des Detektors nicht zeitgleich erfolgt, sondern die Messsignale des Detektors digitalisiert und in ein Speichermedium geschrieben werden. Hierdurch ist es nicht mehr notwendig, dass mit der vorgegebenen Abtastrate auch eine entsprechende Auswertegeschwindigkeit gegeben sein muss.

Lediglich die Digitalisierungseinheit muss derart ausgestaltet sein, dass ein Abtasten des Messsignals des Detektors und eine entsprechende Digitalisierung und Speichern der digitalen Daten mit der vorgegebenen Abtastrate gewährleistet ist. Insbesondere ist es vorteilhaft, die Messdaten des Detektors mittels eines Speicheroszilloskops zu digitalisieren und/oder speichern.

Die eigentliche Auswertung der digitalisierten Messsignale erfolgt "off-line", d. h. zeitlich unabhängig von der Abtastrate.

Vorteilhafterweise umfasst das erfindungsgemäße Vibrometer daher eine Auswerteeinheit, eine Speichereinheit und eine Digitalisierungseinheit, die derart mit dem Detektor zusammenwirkend ausgestaltet ist, dass die Messdaten des Detektors mit einer vorgegebenen Abtastrate durch die Digitalisierungseinheit digitalisierbar und digitaler Form in der Speichereinheit speicherbar sind.

Untersuchungen der Anmelderin haben ergeben, dass hierbei eine Abtastrate vorteilhaft ist, die mindestens das Doppelte der Trägerfrequenz beträgt, insbesondere mindestens das Vierfache, vorzugsweise das Sechsfache der Trägerfrequenz. Typische Trägerfrequenzen der erfindungsgemäßen Vorrichtung und des erfindungsgemäßen Verfahrens liegen bei 600 MHz, so dass vorteilhafterweise die Abtastrate größer 1,2 GHz, insbesondere größer 2,4 GHz, vorzugsweise größer 3,6 GHz ist.

Das erfindungsgemäße Vibrometer umfasst vorteilhafterweise eine Auswerteeinheit zur Demodulation der Messdaten des Detektors, wobei die Speichereinheit einen Datenausgang zur Ausgabe der gespeicherten digitalen Daten aufweist und die Auswerteeinheit einen Dateneingang zum Einlesen dieser digitalen Daten aufweist. Die Auswerteeinheit ist mit der Speichereinheit derart zusammenwirkend ausgestaltet, dass eine wie zuvor beschriebene off-line Demodulation der gespeicherten digitalen Messdaten ausgeführt wird.

Bei Verwendung eines akustooptischen Modulators treten üblicherweise neben den erwünschten Beugungsstrahlen 1. und -1. Ordnung auch andere Beugungsstrahlen aus dem akustooptischen Modulator aus, insbesondere ein Strahl 0. Ordnung. Vorteilhafterweise umfasst das erfindungsgemäße Vibrometer daher mindestens eine optische Strahlfalle, welcher derart im Strahlengang des akustooptischen Modulators angeordnet ist, dass ein oder mehrere Beugungsstrahlen mit Ausnahme der 1. und -1. Ordnung durch die Strahlfalle absorbiert werden, insbesondere der Beugungsstrahl 0. Ordnung.

Die vorliegende Erfindung beruht somit auf der Erkenntnis, dass eine Erhöhung der maximal messbaren Schwingungsfrequenz durch Verwendung von Beugungsstrahlen 1. und -1. Ordnung des Ursprungsstrahls erreicht wird.

Ein erfindungsgemäßes Verfahren zur optischen Vermessung eines Objekts umfasst folgende Verfahrensschritte:

> In einem Verfahrensschritt A wird ein Ursprungsstrahl erzeugt und in einem Verfahrensschritt B wird dieser Ursprungsstrahl in einen Referenz- und einen Messstrahl aufgeteilt und ein Frequenzunterschied zwischen Referenz- und Messstrahl erzeugt.

In einem Verfahrensschritt C wird der Referenzstrahl und der zumindest teilweise von dem Objekt reflektierte Messstrahl auf einem Detektor überlagert.

Schließlich wird in einem Verfahrensschritt D eine Auswertung der Messdaten des Detektors vorgenommen.

Wesentlich ist, dass in Verfahrensschritt B das Aufteilen des Ursprungsstrahls und die Erzeugung des Frequenzunterschieds mittels eines akustooptischen Modulators durchgeführt wird, wobei der Ursprungsstrahl mindestens in zwei Beugungsstrahlen mittels des akustooptischen Modulators aufgeteilt wird, nämlich einem Beugungsstrahl 1. Ordnung und einem Beugungsstrahl -1. Ordnung. Hierbei ist einer der beiden Beugungsstrahlen der Referenzstrahl und der andere Beugungsstrahl der Messstrahl.

Weiterhin wird in Schritt B mittels des akustooptischen Modulators der Frequenzunterschied zwischen Referenz- und Messstrahl erzeugt.

In einer vorteilhaften Ausgestaltung des erfindungsgemäßen Verfahrens werden in Schritt D die Messdaten des Detektors digitalisiert und in digitaler Form auf einem Speichermedium gespeichert. Insbesondere ist es vorteilhaft, wenn in Schritt D die Messdaten derart ausgewertet werden, dass die in digitaler Form gespeicherten Messdaten von einer Auswerteeinheit ausgelesen und ausgewertet werden.

Eine weitere Erhöhung der maximal messbaren Schwingungsfrequenz ist durch das nachfolgend beschriebene erfindungsgemäße Verfahren zur optischen Vermessung eines Objekts gemäß Anspruch 9 möglich. Dieses erfindungsgemäße Verfahren führt zu einer Erhöhung der maximal messbaren Schwingungsfrequenz und kann selbständig oder in Kombination mit dem zuvor beschriebenen Verfahren angewendet werden, wobei sich bei der Kombination beider Verfahren eine nochmalige Erhöhung der maximal messbaren Schwingungsfrequenz ergibt.

Dem erfindungsgemäßen Verfahren gemäß Anspruch 9 liegt die Erkenntnis der Anmelderin zugrunde, dass eine Modifizierung des Vorgehens beim Auswerten der Messsignale des Detektors zu einer erhöhten maximal messbaren Schwingungsfrequenz führt.

Das erfindungsgemäße Verfahren umfasst die bereits zuvor beschriebenen Verfahrensschritte A bis D.

Wesentlich ist, dass Schritt D folgende Schritte umfasst:

> In einem Schritt D1 wird das Messsignal des Detektors mit einer vorgegebenen Abtastfrequenz $f_S$ für eine vorgegebene Abtastdauer $T_S$ abgetastet. Hierdurch ergibt sich eine vorgegebene Anzahl $n=rd[f_S*T_S]+1$ von Abtastvorgängen, wobei $rd[x]$ die mittels Rundung bestimmte nächstliegende ganze Zahl zu x ist, sodass die vorgegebene Anzahl $n$ eine natürliche Zahl ist.

In dem Schritt D1 wird somit eine zeitliche Diskretisierung des Messsignals des Detektors vorgenommen.

In einem Schritt D2 werden die in dem Abtastvorgang erhaltenen Messwerte als Messwerte $A[i]$ in digitaler Form für jeden Abtastvorgang abgespeichert. Diese Abspeicherung kann zeitgleich oder über einen Pufferspeicher zeitversetzt zu dem in Schritt B1 beschriebenen Abtastvorgang stattfinden.

Es werden somit insgesamt n Messwerte in digitaler Form abgespeichert.

In einem Schritt D3 wird ein komplexes Spektrum $F[i]$ aus den gespeicherten Messwerten mittels Frequenztransformation bestimmt, z.B. mittels einer der an sich bekannten Frequenztransformation: Diskrete Fourier-Transformation (DFT), Fast-Fourier-Transformation (FFT) oder Diskrete Hartley Transformation (DHT). Das komplexe Spektrum umfasst $n$ Werte $F[i]$

*(i=1,2..n).* Diese Bestimmung eines komplexen Spektrums aus den diskreten Messwerten ist an sich bekannt, insbesondere die Verwendung der Diskreten Fourier-Transformation. Bei einer Gesamtanzahl von diskreten Messwerten, die einer Zweierpotenz entspricht, wird vorteilhafter Weise die Fast-Fourier-Transformation angewandt. Die Verwendung der Diskreten Fourier-Transformation ist beispielsweise in dem Buch E. Oran Brigham, "FFT Schnell Fourier-Transformation", 4. Auflage, R. Oldenbourg Verlag 1989, ISBN 3-486-21332-6 auf den Seiten 113 bis 135 beschrieben und die Fast-Fourier-Transformation in der gleichen Veröffentlichung auf den Seiten 181 bis 207.

Wesentlich ist nun, dass in einem Schritt D4 ein erweitertes komplexes Spektrum bestimmt wird. Der Bestimmung des erweiterten Spektrums liegt folgende Erkenntnis zugrunde. Bei den folgenden Formeln sind wie in der Mathematik üblich die Multiplikationsoperatoren nicht explizit angegeben.

Grundsätzlich hat das diskrete DFT- oder FFT-Spektrum immer nur einen Eintrag für den Signal-Offset, nämlich den ersten Eintrag in der Liste für die Frequenz Null. Für reelle Zeitsignale findet man das Spektrum über die Indizes $F[i_H] = F\lfloor i_{L,\max} - i_L +1\rfloor$ für gerade $n$ und $F[i_H] = F\lfloor i_{L,\max} - i_L +2\rfloor$ für ungerade $n$ gespiegelt wieder vor, wobei $i_L$ alle Indizes $2...(n+1)/2$ für ungerade $n$ und $2...n/2+1$ für gerade $n$ sind. Der größte Index, der zu $i_L$ gehört, wird als $i_{L\max}$ bezeichnet. $i_H$ sind alle Indizes größer 1 von $i$, die nicht zu $i_L$ gehören. Bei geraden $n$ kommt der höchste Frequenzwert $F[i_{L,\max}]$ nämlich nur einmal in der Liste vor. Den Offset-Eintrag gibt es in beiden Fällen nur einmal bei $i = i_O = 1$. Die einzelnen diskreten Frequenzlinien liegen um $\Delta F = F[i + 1] - F[i] = 1/T_S$ auseinander, wobei $T_S$ die Gesamtabtastdauer des Abtastvorgangs in Schritt D1 ist.

Wesentlich ist nun, dass in einem Schritt D4 ein erweitertes komplexes Spektrum $F_{erw}$ mit 2 $m$ mehr Einträgen bestimmt wird, $m \in \mathbf{N}$.

Zunächst wird der Index $i_c$ der Trägerfrequenz $f_C$ im komplexen Spektrum bestimmt, d.h. derjenige Index, für den gilt: $f_C = F[i_c]$. Der Index $i_c$ gibt somit an, welcher diskreten Variable $F[i_c]$ im komplexen Spektrum der Trägerfrequenz $f_C$ entspricht (bis auf etwaige Rundungsfehler bei der Bestimmung von $i_C$).

Die Grundidee bei der Erstellung des erweiterten Spektrums ist, dass die Trägerfrequenz im Bereich von $i_L$ um m Stellen zu größeren Indizes hin verschoben wird $f_C = F[i_C] \rightarrow f_{C\,erw} = f_C + m\Delta F = F\lfloor i_{C\,erw} = i_C + m\rfloor$ und dass dadurch die Frequenzeinträge mit einem Index größer der verschobenen Trägerfrequenz ($i > i_C$) durch äquivalentes Verschieben der Einträge im gleichen Abstand zur Trägerfrequenz bleiben ($F_{erw}\lfloor i + m\rfloor = F[i]$). Dadurch ergibt sich ein neues diskretes Spektrum $F_{erw}$ welches insgesamt m mehr Einträge für $i_L$ benötigt, also $Number(i_{Lerw}) = m + Number(i_L)$, wobei $Number(i_x)$ die Anzahl der Indizes $i_X$ bezeichnet. Die Einträge mit einem Index kleiner als $i_{C\,erw}$ werden aus den Einträgen von $F[i]$ mit einem Index größer $i_C$ konstruiert (diese Einträge entsprechen nun den Einträgen $F_{erw}[i]$ mit einem Index größer $i_{C\,erw}$). Von diesen Einträgen werden die negativ konjugiert komplexen Werte genommen, d.h. die Einträge von $F_{erw}$ mit einem Index kleiner $i_{C\,erw}$ werden gemäß $F_{erw}\lfloor i_{C\,erw} - j\rfloor = -CC(F_{erw}\lfloor i_{C\,erw} + j\rfloor) = -CC(F[i_C + j])$ berechnet, mit $j = 1,2,...,i_{Cerw}-2$. D.h. die ursprünglichen Frequenzeinträge mit Index $i < i_C$ werden nicht verwendet und somit gelöscht. Auf diese Weise wird ein Spektrum mit einer um $m\Delta F$ verschobenen Trägerfrequenz konstruiert, bei der Störeffekte bei Frequenzen kleiner der ursprünglichen Trägerfrequenz unterdrückt werden. Um die Standard-Algorithmen für die Inverse Diskrete oder Inverse Schnelle Fourier-Transformation für die Rücktransformation in den Zeitbereich anwenden zu können, müssen noch die Einträge für $i_{H\,erw}$ bestimmt werden. Diese lassen sich analog zu den Einträgen $i_{L\,erw}$ berechnen oder können über die Formel $F[i_H] = F\lfloor i_{L,\max} - i_L +1\rfloor$ für gerade $n$ und $F[i_H] = F\lfloor i_{L,\max} - i_L +2\rfloor$ für ungerade $n$ jeder Zeit aus den Einträgen mit Index $i_{L\,erw}$ bestimmt werden. Ebenso ist eine gleichartige Auswertung mittels der Hartley Transformation möglich.

Damit genügend Information in den Messwerten für eine wie oben beschriebene Auswertung mit erweiterter Bandbreite vorliegt, muss die Abtastrate, mit der die Messwerte gemessen werden, hinreichend hoch gewählt werden: Grundsätzlich gilt, dass $i_{L\,max}$ vor der Konstruktion des erweiterten Spektrums mindestens 2 $i_C+m-1$ betragen muss. Weiterhin gilt der Zusammenhang, dass $i_{L\,max}$ mit steigender Abtastrate ebenfalls steigt. Die Abtastrate muss somit ausreichend hoch gewählt werden, so dass $i_{L\,max}$ größer oder gleich 2 $ic+m-1$ ist, sofern $n + 2\,m$ eine ungerade Zahl ist und $i_{L\,max}$ größer oder gleich 2 $i_C+m-2$ ist, sofern $n + 2\,m$ eine gerade Zahl ist. Soll beispielsweise bei einer Trägerfrequenz von 600 MHz bei der Auswertung die Bandbreite auf das Doppelte (1,2 GHz) erhöht werden ($m = i_C$), so muss die Abtastrate mindestens das Sechsfache der Trägerfrequenz, d.h. mindestens 3,6 GHz betragen.

Es ist eine allgemeine Eigenschaft, dass kleine Schwingungen bei einem heterodynen Interferometer einen phasenmodulierten Träger erzeugen, dessen Seitenbänder rechts und links vom Träger in einer definierten Phasenbeziehung zueinander liegen, d.h. es gilt $-J_1 \sin(2\pi (f_C-f_{mod})\ t)$ für eine Besellinie links vom Träger falls die Besellinie rechts vom Träger $J_1 \sin(2\pi (f_C-f_{mod})\ t)$ beträgt. Ziel der Signalverarbeitung ist es genau dieses Verhalten auszunutzen und somit ist jede alternative Lösung der Konstruktion eines erweiterten Spektrums aus den Frequenzkomponenten $f$ mit $f > f_C$ äquivalent.

Vorteilhafterweise ist die Abtastdauer bei dem erfindungsgemäßen Verfahren gemäß Anspruch 9 derart gewählt, dass sie ein ganzzahliges Vielfaches der Periodendauer $T_C$ der Trägerfrequenz beträgt, d.h. $T_S = N\ Tc = N/f_C$, wobei $N$ eine natürliche Zahl ist. Hierdurch werden Fehler bei der Berechnung des erweiterten Spektrums vermieden, da die Trägerfrequenz genau auf einer Linie im diskreten Spektrum liegt.

In einer vorteilhaften Ausführungsform umfasst das erfindungsgemäße Verfahren in Schritt D4 folgende Schritte:

In Schritt D4 wird ein erweitertes komplexes Spektrum $F_{erw}[j]$ bestimmt, welches für eine vorgegebene Anzahl $m>0$ insgesamt $n+2\,m$ Werte aufweist, d.h. es werden für die Indizes $j = (1,2,...,n+2\,m)$ Werte für $F_{erw}[j]$ bestimmt, wobei diese Bestimmung folgende Verfahrensschritte umfasst:

In einem Schritt i. wird der Abstand $\Delta F$ zwischen den Frequenzlinien des diskreten Spektrums bestimmt. $\Delta F$ ist auch als Frequenzauflösung bekannt. Dies erfolgt vorzugsweise durch Bildung der Differenz $\Delta F = F[i_L+1]-F[i_L]$, wobei $i_L$ wie folgt definiert ist: $i_L$ bezeichnet alle Indizes $2...(n+1)/2$ für ungerade $n$ und $2...n/2+1$ für gerade $n$ sind. Der größte Index, der zu $i_L$ gehört, wird als $i_{L\,max}$ bezeichnet.

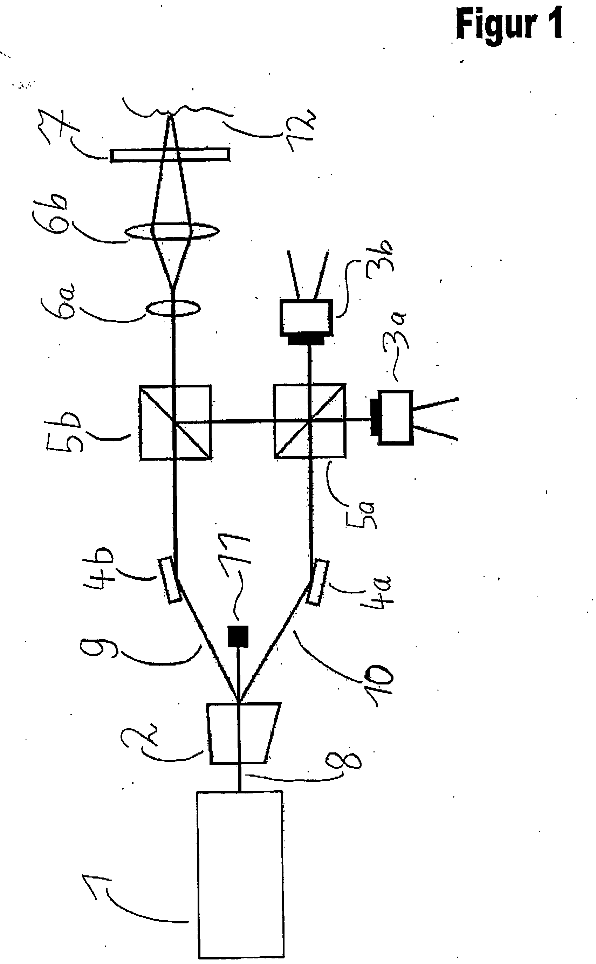

In einem Schritt ii. wird der Index $i_c$ der Trägerfrequenz $f_C$ im komplexen Spektrum bestimmt, d.h. derjenige Index, für den gilt: $f_C = F[i_c]$.
Die Bestimmung erfolgt vorzugsweise über $i_c = rd[(f_C/\Delta F)+1]$, wobei $rd[x]$ die mittels Rundung bestimmte nächstliegende ganze Zahl zu x ist. Der Index $i_c$ gibt somit an, welcher diskreten Variable $F[i_c]$ im komplexen Spektrum der Trägerfrequenz $f_C$ entspricht (bis auf evtl. Abweichungen aufgrund der Rundung).
Ebenso liegt es im Rahmen der Erfindung, die Frequenzauflösung über die Gesamtabtastdauer zu bestimmen, d.h. $\Delta F = 1/T_S$.
In einem Schritt iii. wird die Trägerfrequenz im erweiterten Spektrum an dem Index $I_{c,erw} = i_c+m$ festgelegt über $F_{erw}[i_{c,erw}] = F[i_c]$.
In einem Schritt iv. werden die Werte $F_{erw}$ wie folgt definiert: $F_{erw}[i_L+m] = F[i_L]$.
In einem Schritt v. werden die Werte $F_{erw}[i_{C,erw}-i]$ für die Indizes $i=(1,2,...,i_{C,erw}-2)$ bestimmt über $F_{erw}[i_{C,erw}-i] = -CC(F_{erw}[i_{C,erw}+i])$, wobei $-CC(x)$ das negativ komplex Konjugierte einer komplexen Zahl x bezeichnet.
In einem Schritt vi. werden die Werte $F[i_{H,erw}]$ über die Rechenvorschrift $F_{erw}[i_{H,erw}] = F_{erw}[i_{L,max}+m-i_{L,erw}+1]$ für gerade $n+2m$ und über $F_{erw}[i_{H,erw}] = F_{erw}[i_{L,max}+m-i_{L,erw}+2]$ für ungerade $n+2m$ bestimmt, wobei für den Index $i_{L,erw} = 2,3...i_{L,max}+m$ und für $i_{H,erw} = i_{L,max}+m+1,...,n+2m$ gilt.
In einem Schritt vii. wird das erweiterten komplexen Spektrums $F_{erw}[j]$ ($j = 1,2...n+m$) in den Zeitbereich zurücktransformiert. Diese Transformation erfolgt vorzugsweise über die Inverse Diskrete Foutiertransformation oder die Inverse Schnelle Fouriertransformation.
In einem Schritt viii erfolgt die Demodulation des rücktransformierten erweiterten komplexen Spektrums $F_{erw}$ unter Verwendung einer erweiterten Trägerfrequenz $f_{c,erw} = f_c+m\Delta F$.
Insbesondere ist es vorteilhaft, bei dem erweiterten Spektrum die doppelte Trägerfrequenz zu wählen, d.h. $m$ wie folgt zu wählen: $m = rd[f_c/\Delta F]$, wobei $rd[x]$ die mittels Rundung bestimmte nächstliegende ganze Zahl zu x ist. Hierdurch ist gewährleistet, dass $f_{c,erw} = f_c+m\Delta F$ in etwa (bis auf Abweichungen aufgrund der Rundung von $m$) dem doppelten der Trägerfrequenz $f_c$ entspricht.
Bei den zuvor beschriebenen Variablen besitzen $fs$, $f_c$ und $f_{C,erw}$ die Einheit $[1/s]$ und die Variable $T_S$ die Einheit $[s]$.
In einer vorteilhaften Ausgestaltung wird der resultierende komplexe Frequenzgang $G_{ch}(\omega)$ der Signalübertragungskette vom Detektor zur Digitalisierungseinheit durch ein digitales Filter kompensiert. Die Signalübertragungskette umfasst dabei alle Komponenten der Vorrichtung, welche eine Beeinflussung des Signals hervorrufen können, insbesondere die optischen Komponenten, der Detektor sowie elektrische Kabel und Stecker. Die Kompensation kann entweder beim diskreten Spektrum durch einen komplexen diskreten Frequenzgang $G_{komp}(\omega[i]) = G_{komp}[i]$ geschehen, der so gewählt ist, dass die komponentenweise Multiplikation mit dem komplexen diskreten Spektrum $G_{ch}[i]$ einen Vektor mit Einsen als Einträgen ergibt $G_{ch}[i]G_{komp}[i]=1$. Alternativ kann auch die Rücktransformierte des Frequenzgangs $G_{komp}[i]$ (z.B. über die Inverse Diskrete Fouriertransformation, die Inverse Schnelle Fouriertransformation oder die Inverse Diskrete Hartley-Transformation) mit dem gespeicherten Zeitsignal des Detektorsignals gefaltet werden.
$G_{komp}[i]$ ist die inverse diskrete Übertragungsfunktion von $G_{ch}[i]$ ($G_{komp}[i] = G_{ch}^{-1}[i]$). Die beschriebene Filterung der Übertragungskette mittels einer inversen Übertragungsfunktion ist an sich bekannt und beispielsweise in Otto Föllinger, Regelungstechnik, 8. überarbeitete Auflage, Hüttig Buch Verlag, Heidelberg, 1994, Seite 74 beschrieben.
Weitere vorteilhafte Ausgestaltungen werden anhand des in der Figur 1 dargestellten Ausführungsbeispiels eines erfindungsgemäßen Vibrometers dargestellt und beschrieben. Dabei zeigt:

Figur 1 eine schematische Darstellung eines erfindungsgemäßen Vibrometers.

Das in Figur 1 dargestellte erfindungsgemäße Vibrometer umfasst eine als Laser 1 ausgeführte Strahlungsquelle, einen als Braggzelle 2 ausgeführten akustischen Modulator, welche die Funktion eines Strahlteilers und einer Frequenzverschiebeeinheit vereint, sowie einen zwei Photodioden 3a und 3b umfassenden Detektor. Ebenso liegt es auch im Rahmen der Erfindung, den Detektor lediglich mit einer Photodiode auszuführen.
Das Vibrometer umfasst ferner eine Überlagerungsvorrichtung, welche mehrere optische Komponenten umfasst: Umlenkspiegel 4a, 4b; Strahlteiler 5a und 5b, optische Linsen 6a und 6b sowie eine $\lambda/4$-Platte 7.
Der Laser 1 erzeugt einen Ursprungsstrahl 8, der mittels der Braggzelle 2 derart gebeugt wird, dass ein Beugungsstrahl 1. und ein Beugungsstrahl -1. Ordnung austritt. Die Braggzelle 2 ist derart im Strahlengang der Überlagerungsvorrichtung angeordnet, dass der Beugungsstrahl -1. Ordnung ein Messstrahl 9 und der Beugungsstrahl 1. Ordnung ein Referenzstrahl 10 ist. Ein weiterhin aus der Braggzelle austretender Strahl 0. Ordnung wird durch eine Strahlfalle 11 absorbiert.

Der Messstrahl 9 wird mittels des Umlenkspiegels 4b, des Strahlteiler 5b, der Linsen 6a und 6b sowie der λ/4-Platte 7 auf ein schwingendes, zu vermessendes Objekt 12 geleitet.

Der zumindest teilweise von dem Objekt 12 reflektierte Messstrahl 9 tritt wieder in den Strahlengang des Vibrometers und insbesondere der Überlagerungsvorrichtung ein und wird über die λ/4-Platte 7, die Linsen 6b und 6a, den Strahlteiler 5b und den Strahlteiler 5a auf die Photodiode 3a geleitet.

Der Referenzstrahl 10 wird über den Umlenkspiegel 4a und den Strahlteiler 5a ebenfalls auf die Photodiode 3a geleitet, so dass auf der Detektorfläche der Photodiode 3a Mess- und Referenzstrahl überlagert sind und somit mittels der Photodiode 3a ein Interferenzsignal von Mess- und Referenzstrahl messbar ist.

Die Braggzelle 2 ist ferner als akustooptischer Modulator ausgeführt und wird von einer nicht dargestellten akustischen Anregeeinheit mit akustischen Wellen derart beaufschlagt, dass zwischen Messstrahl 9 und Referenzstrahl 10 ein Frequenzunterschied erzeugt wird.

Der Laser 1 ist als frequenzverdoppelter Nd:Yag-Laser ausgeführt und erzeugt monochromatisches Licht mit einer Wellenlänge von 532 nm. Die Braggzelle ist derart ausgeführt, dass Mess- und Referenzstrahl einen Frequenzunterschied von etwa 612 MHz aufweisen.

Das in Figur 1 dargestellte Vibrometer ist somit ein heterodynes Vibrometer mit einer Trägerfrequenz von 612 MHz.

Die Braggzelle 2 ist dabei derart ausgeführt, dass für den Einfallswinkel des Ursprungsstrahl 8 in die Braggzelle 2 gleichzeitig eine maximale Intensität des Beugungsstrahls 1. Ordnung als auch eine maximale Intensität des Beugungsstrahls -1. Ordnung vorliegt, so dass eine Intensitätsoptimierung hinsichtlich der Intensität von Mess- und Referenzstrahl erreicht wird.

**Patentansprüche**

1. Vibrometer zur optischen Schwingungsmessung an einem Objekt (12), umfassend eine Strahlungsquelle zur Erzeugung eines Ursprungsstrahls, einen Strahlteiler zur Aufteilung des Ursprungsstrahls in einen Mess-und einen Referenzstrahl (10), eine optische Überlagerungsvorrichtung zur Überlagerung des Referenzstrahls mit einem von dem Objekt (12) zumindest teilweise reflektierten Messstrahl (9) und einen Detektor, wobei Überlagerungsvorrichtung und Detektor derart zusammenwirkend ausgestaltet sind, dass der von dem Objekt (12) zumindest teilweise reflektierte Messstrahl (9) und der Referenzstrahl (10) auf dem Detektor überlagert sind und wobei das Vibrometer als heterodynes Vibrometer ausgeführt ist, mit einer optischen Frequenzverschiebeeinheit, welche im Strahlengang des Vibrometers angeordnet ist, zur Ausbildung einer Trägerfrequenz durch Erzeugung eines Frequenzunterschiedes zwischen Mess- und Referenzstrahl (10), **dadurch gekennzeichnet,**
**dass** Strahlteiler und Frequenzverschiebeeinheit in einem optischen Bauelement als akustooptischer Modulator zur Beugung des Ursprungsstrahls ausgeführt sind,
wobei der akustooptische Modulator derart ausgeführt ist, dass der in den akustooptischen Modulator eintretende Ursprungsstrahl (8) in mindestens zwei Beugungsstrahlen aufteilbar ist:

einen ersten Beugungsstrahl 1. Beugungsordnung sowie
einen zweiten Beugungsstrahl -1. Beugungsordnung und
**dass** der akustooptische Modulator derart im Strahlengang des Vibrometers angeordnet ist, dass einer der zwei Beugungsstrahlen der Messstrahl (9) und der andere Beugungsstrahl der Referenzstrahl (10) ist,
**dass** die Strahlungsquelle derart ausgeführt ist, dass sie einen monochromatischen Strahl einer vorgegebenen Wellenlänge erzeugt und
**dass** der akustooptische Modulator derart ausgeführt ist, dass der optimale Einfallswinkel für eine maximale Intensität des Beugungsstrahls 1. Ordnung identisch zu dem optimalen Einfallswinkel für eine maximale Intensität des Beugungsstrahls -1. Ordnung ist, zumindest für einen einfallenden Strahl mit der vorgegebenen Wellenlänge.

2. Vibrometer nach Anspruch 1,
**dadurch gekennzeichnet,**
**dass** der akustooptische Modulator als slow shear mode Braggzelle (2) ausgeführt ist.

3. Vibrometer nach einem der vorangegangenen Ansprüche,
**dadurch gekennzeichnet,**
**dass** das Vibrometer eine Auswerteeinheit erfasst, zur Auswertung der Messsignale des Detektors, wobei die Auswerteeinheit eine Speichereinheit und eine Digitalisierungseinheit umfasst, welche derart mit dem Detektor zusammenwirkend ausgestaltet ist, dass die Messdaten des Detektors mit einer vorgegebenen Abtastrate durch die Digitalisierungseinheit digitalisierbar und in digitaler Form in der Speichereinheit speicherbar sind,
insbesondere, dass die Abtastrate mindestens das doppelte der Trägerfrequenz, insbesondere mindestens das Vierfache, vorzugsweise mindestens das Sechsfache der Trägerfrequenz beträgt.

4. Vibrometer nach Anspruch 3,
**dadurch gekennzeichnet,**
**dass** das Vibrometer eine Auswerteeinheit zur Demodulation der Messdaten des Detektors umfasst, wobei die Speichereinheit einen Datenausgang zur Ausgabe der gespeicherten digitalen Daten aufweist und die Auswerteeinheit einen Dateneingang zum Einlesen von digitalen Daten aufweist und die Auswerteeinheit mit der Speichereinheit zusammenwirkend ausgeführt ist, zur offline-Demodulation der gespeicherten digitalen Messdaten.

5. Vibrometer nach einem der vorangegangenen Ansprüche,
**dadurch gekennzeichnet,**
**dass** das Vibrometer mindestens eine optische Strahlfalle (11) umfasst, welche derart im Strahlengang des akustooptischen Modulators angeordnet ist, dass ein Beugungsstrahl oder mehrere Beugungsstrahlen mit Ausnahme der 1. und -1. Ordnung durch die Strahlfalle (11) absorbiert werden, insbesondere der Beugungsstrahl 0. Ordnung.

6. Verfahren zur optischen Vermessung eines Objekts, folgende Verfahrensschritte umfassend:

A Erzeugen eines Ursprungsstrahls
B Aufteilen des Ursprungsstrahls in einen Referenz- und einen Messstrahl (9) und Erzeugen eines Frequenzunterschieds zwischen Referenz- und Messstrahl
C Überlagern des Referenzstrahls und des zumindest teilweise von dem Objekt (12) reflektierten Messstrahls auf einem Detektor und
D Auswerten der Messdaten des Detektors

**dadurch gekennzeichnet,**
**dass** in Schritt B das Aufteilen des Ursprungsstrahls und die Erzeugung des Frequenzunterschiedes mittels eines akustooptischen Modulators durchgeführt wird, derart, dass der Ursprungsstrahl (8) mindestens in zwei Beugungsstrahlen aufgeteilt wird, nämlich einen Beugungstrahl 1. Ordnung und einen Beugungsstrahl -1. Ordnung, wobei einer der beiden Beugungsstrahlen der Referenzstrahl (10) und der andere Beugungsstrahl der Messstrahl (9) ist,
**dass** der Ursprungsstrahl mittels einer Strahlungsquelle erzeugt wird, welche derart ausgeführt ist, dass sie einen monochromatischen Strahl einer vorgegebenen Wellenlänge erzeugt und
**dass** ein akustooptischer Modulator verwendet wird, welcher derart ausgeführt ist, dass der optimale Einfallswinkel für eine maximale Intensität des Beugungsstrahls 1. Ordnung identisch zu dem optimalen Einfallswinkel für eine maximale Intensität des Beugungsstrahls -1. Ordnung ist, zumindest für einen einfallenden Strahl mit der vorgegebenen Wellenlänge und
**dass** in Schritt B weiterhin mittels des akustooptischen Modulators der Frequenzunterschied zwischen Referenz- und Messstrahl (9) erzeugt wird.

7. Verfahren nach Anspruch 6,
**dadurch gekennzeichnet,**
**dass** in Schritt D die Messdaten des Detektors digitalisiert und in digitaler Form auf einem Speichermedium gespeichert werden, insbesondere, dass in Schritt D die Messdaten derart ausgewertet werden, dass die in digitaler Form gespeicherten Messdaten von einer Auswerteeinheit ausgelesen und ausgewertet werden.

8. Verfahren zur optischen Vermessung eines Objekts, insbesondere nach einem der Ansprüche 6 bis 7, folgende Verfahrensschritte umfassend:

A Erzeugen eines Ursprungsstrahls
B Aufteilen des Ursprungsstrahls in einen Referenz- und einen Messstrahl (9) und Erzeugen eines Frequenzunterschieds zwischen Referenz- und Messstrahl, der einer vorgegebenen Trägerfrequenz $f_C$ entspricht,
C Überlagern des Referenzstrahls und des zumindest teilweise von dem Objekt (12) reflektierten Messstrahls auf einem Detektor und
D Auswerten des Messdaten des Detektors

**dadurch gekennzeichnet,**
**dass** Schritt D folgende Schritte umfasst:

D1 Abtasten des Messsignals des Detektors mit einer vorgegebenen Abtastfrequenz $f_S$, so dass eine vorgegebene Anzahl $n$ von Messwerten erhalten werden,
D2 Speichern jedes Messwertes $A[i]$ $(i = 1,2...n)$ des Messsignals des Detektors in digitaler Form für jeden Messwert,
D3 Bestimmung eines komplexen Spektrums $F[i]$ $(i = 1,2...n)$ mittels Diskreter Fourier-Transformation oder Fast-Fourier-Transformation aus den gespeicherten Messwerten $A[i]$ $(i = 1,2...,n)$
D4 Bestimmung eines erweiterten komplexen Spektrums $F_{erw}[j]$, welches für eine vorgegebene Anzahl $m > 0$ insgesamt $n+2m$ Werte aufweist $(F_{erw}[j]; j = 1,2...,n+2m)$, wobei die Bestimmung folgende Verfahrensschritte umfasst:

i. Bestimmung der Frequenzauflösung, d.h. des Abstands $\Delta F$ zwischen den Frequenzlinien des diskreten Spektrums,
ii. Bestimmung des Index $i_C$ der Trägerfre-

quenz $f_C$ im komplexen Spektrum, d.h. desjenigen Index, für den gilt: $f_C = F[i_C]$ (bis auf etwaige Rundungsfehler bei der Bestimmung),

iii. Festlegen der Trägerfrequenz im erweiterten Spektrum an dem Index $i_{c,erw} = {}_{ic}+m$: $F_{erw}[i_{c,erw}] = F[i_c]$,

iv. Bestimmung der Werte $F_{erw}[i]$ zu $F_{erw}[i_L+m]=F[i_L]$, wobei $i_L$ alle Indizes $2...(n+1)/2$ für ungerade $n$ und $2...n/2+1$ für gerade $n$ bezeichnet.

v. Bestimmung die Werte $F_{erw}[i_{C,erw}-i]$ für die Indizes $i=(1,2,...,i_{C,erw}-2)$, über $F_{erw}[i_{C,erw}-i]=-CC(F_{erw}[i_{C,erw}+i])$, wobei -$CC(x)$ das negativ komplex Konjugierte einer komplexen Zahl x bezeichnet,

vi. Bestimmung der Werte $F_{erw}[i_{H,erw}]$ über $F_{erw}\lfloor i_{H,erw}\rfloor= F_{erw}\lfloor i_{L,max} +m-i_{L,erw}+1\rfloor$ für gerade $n+2m$

und über

$F_{erw}\lfloor i_{H,erw}\rfloor=F_{erw}\lfloor i_{L,max} +m-i_{L,erw} +2\rfloor$ für ungerade $n+2m$,

wobei für den Index

$$i_{L,erw} = 2,3\ldots i_{L,\max} + m$$

und für

$$i_{H,erw} = i_{L,\max} + m+1,\ldots,n+2m$$

gilt,

vii. Rücktransformation des erweiterten komplexen Spektrums $F_{erw}$ in den Zeitbereich, wobei die Rücktransformation vorzugsweise über die Inverse Diskrete Fouriertransformation oder die Inverse Schnelle Fouriertransformation erfolgt und

viii. Demodulation des rücktransformierten erweiterten komplexen Spektrums $F_{erw}$ unter Verwendung einer erweiterten Trägerfrequenz $f_{c,erw} = f_c+m\Delta F$.

9. Verfahren zur optischen Vermessung eines Objekts, nach Anspruche 8, **dadurch gekennzeichnet,** **dass** m = rd[$f_c/\Delta F$] gewählt wird, wobei rd [x] die mittels Rundung bestimmte nächstliegende ganze Zahl zu x ist.

10. Verfahren zur optischen Vermessung eines Objekts nach einem der Ansprüche 8 bis 9, **dadurch gekennzeichnet,** **dass** die Abtastdauer derart gewählt ist, dass sie ein ganzzahliges Vielfaches der Periodendauer $T_C$ der Trägerfrequenz beträgt, d.h. $T_S = N T_C = N/f_C$, wobei $N$ eine natürliche Zahl ist.

11. Verfahren zur optischen Vermessung eines Objekts nach einem der Ansprüche 8 bis 10, **dadurch gekennzeichnet,** **dass** der resultierende komplexe Frequenzgang $G_{ch}(\omega)$ der Signalübertragungskette vom Detektor zur Digitalisierungseinheit durch ein digitales Filter kompensiert wird, wobei vorteilhafterweise diese Kompensation kann beim diskreten Spektrum durch einen komplexen diskreten Frequenzgang $G_{komp}(\omega[i]) = G_{komp}[i]$ erfolgt, der so gewählt ist, dass die komponentenweise Multiplikation mit dem komplexen diskreten Spektrum $G_{ch}[i]$ einen Vektor mit Einsen als Einträgen ergibt $G_{ch}[i]G_{komp}[i]=1$ oder die Rücktransformierte des Frequenzgangs $G_{komp}[i]$ mit dem gespeicherten Zeitsignal des Detektorsignals gefaltet wird.

## Claims

1. A vibrometer for optical vibration measurement on an object (12) including a radiation source for producing an original beam, a beam splitter for dividing the original beam into a measuring beam and a reference beam (10), an optical superimposition device for superimposing the reference beam with a measuring beam (9) at least partially reflected from the object (12) and a detector, wherein the superimposition device and detector are constructed to cooperate such that the measuring beam (9) at least partially reflected from the object (12) and the reference beam (10) are superimposed on the detector and wherein the vibrometer is constructed in the form of a heterodyne vibrometer with an optical frequency shifting unit, which is arranged in the beam path of the vibrometer, for forming a carrier frequency by producing a frequency difference between the measuring beam and reference beam (10), **characterised in that** the beam splitter and frequency shifting unit are constructed in an optical unit as an acousto-optical modulator for diffracting the original beam, wherein the acousto-optical modulator is so constructed that the original beam (8), entering into the acousto-optical modulator, is dividable into at least two diffraction beams:

   a first diffraction beam of first diffraction order and a second diffraction beam of -1 diffraction order
   and that the acousto-optical modulator is arranged in the beam path of the vibrometer so that one of the two diffraction beams is the measuring beam (9) and the other diffraction beam is the reference beam (10),
   that the radiation source is so constructed that it produces a monochromatic beam of a predetermined wavelength and
   that the acousto-optical modulator is so constructed that the optimal angle of incidence for a maximum intensity of the diffraction beam of first order is identical to the optimal angle of incidence for a maximum intensity of the diffraction beam of -1 order, at least for an incident beam with the predetermined wavelength.

2. A vibrometer as claimed in Claim 1, **characterised in that** the acousto-optical modulator is constructed in the form of a slow shear mode Bragg cell (2).

3. A vibrometer as claimed in one of the preceding claims, **characterised in that** the vibrometer includes an evaluating unit for evaluating the measurement signals from the detector, wherein the evaluating unit includes a storage unit and a digitalisation unit, which is constructed to cooperate with the detector such that the measured data from the detector may be digitalised by the digitalisation unit with a predetermined sampling rate and are storable in digital form in the storage unit, particularly that the sampling rate is at least double the carrier frequency, particularly at least four times and preferably at least six times the carrier frequency.

4. A vibrometer as claimed in Claim 3, **characterised in that** the vibrometer includes an evaluating unit for demodulating the measured data from the detector, wherein the storage unit has a data output for delivering the stored digital data and the evaluating unit has a data input for reading digital data and the evaluating unit is constructed to cooperate with the storage unit for offline demodulation of the stored digital measurement data.

5. A vibrometer as claimed in one of the preceding claims, **characterised in that** the vibrometer includes at least one optical beam trap (11), which is arranged in the beam path of the acousto-optical modulator so that a diffraction beam or a plurality of diffraction beams with the exception of the first and -1 order are absorbed by the beam trap (11), particularly the diffraction beam of zeroth order.

6. A method of optically surveying an object including the following method steps:

   A producing an original beam
   B dividing the original beam into a reference beam and a measuring beam (9) and producing a frequency difference between the reference and measuring beams
   C superimposing the reference beam and the measuring beam at least partially reflected from the object (12) onto a detector and
   D evaluating the measurement data from the detector

**characterised in that** in step B the division of the original beam and the production of the frequency difference is effected by means of an acousto-optical modulator such that the original beam (8) is divided into at least two diffraction beams, namely a diffraction beam of first order and a diffraction beam of -1 order, wherein one of the two diffraction beams is the reference beam (10) and the other diffraction beam is the measuring beam (9),
that the original beam is produced by means of a radiation source, which is constructed so that it produces a monochromatic beam of a predetermined wavelength and
that an acousto-optical modulator is used which is constructed so that the optimal angle of incidence for a maximum intensity of the diffraction beam of first order is identical to the optimal angle of incidence for a maximum intensity of the diffraction beam of -1 order, at least for an incident beam with the predetermined wavelength and
that in step B the frequency different between the reference beam and measuring beam (9) is further produced.

7. A method as claimed in Claim 6, **characterised in that** in step D the measurement data from the detector is digitalised and stored in digital form on a storage medium, particularly that in step D the measurement data are evaluated so that the measurement data stored in digital form are read and evaluated by an evaluation unit.

8. A method of optically surveying an object, particularly as claimed in one of Claims 6 to 7, including the following method steps:

   A producing an original beam
   B dividing the original beam into a reference beam and a measuring beam (9) and producing a frequency difference between the reference and measuring beams, which corresponds to a predetermined carrier frequency $f_c$,
   C superimposing the reference beam and the measuring beam at least partially reflected from the object (12) onto a detector and
   D evaluating the measurement data from the detector

**characterised in that** step D includes the following steps:

   D1 sampling the measuring signal from the detector with a predetermined sampling frequency $f_s$ so that a predetermined number n of measurement values are obtained,
   D2 storing each measurement value $A[i]$ $(i = 1,2...n)$ of the measurement signal from the detector in digital form for each measurement value,

D3 determining a complex spectrum $F[i]$ $(i = 1,2...n)$ by means of discrete Fourier transformation or fast Fourier transformation from the stored measurement values $A[i]$ $(i = 1,2...n)$

D4 determining a broadened complex spectrum $F_{erw}[j]$, which for a predetermined number $m > 0$ has altogether n+2 $m$ values $(F_{erw}[j]; j = 1,2...,n+2\ m)$, wherein the determination includes the following method steps:

i. determining the frequency resolution, i.e. the distance $\Delta F$ between the frequency lines of the discrete spectrum,

ii. determining the index $i_c$ of the carrier frequency $f_c$ in the complex spectrum, i.e. that index for which the following applies: $f_c = F[i_c]$ (except for possible rounding errors in the determination),

iii. fixing the carrier frequency in the broadened spectrum to the index $i_{c,erw} = i_c+m$: $F_{erw}[i_{c,erw}] = F[i_c]$,

iv. determining the values $F_{erw}[i]$ to $F_{erw}[i_L+m]=F[i_L]$, wherein $i_L$ designates all indices $2...(n+1)/2$ when $n$ is odd and $2...n/2+1$ when n is even,

v. determining the values $F_{erw}[i_{c,erw}-i]$ for the indices $i=(1,2,...,i_{c,erw}-2)$, via $F_{erw}[i_{c,erw}-i]=CC(F_{erw}[i_{c,erw}+i])$, wherein - $CC(x)$ designates the negatively complex conjugate of a complex number x,

vi. determining the values $F_{erw}[i_{H,erw}]$ via $F_{erw}[i_{H,erw}]= F_{erw}[i_{L,max}+m-i_{L,erw} +1]$ when $n+2m$ is even

and via

$F_{erw}[i_{H,erw}]= F_{erw}[i_{L,max}+m-i_{L,erw}+2]$ when $n+2m$ is odd,

wherein for the index

$$i_{L,erw} = 2,3...i_{L,max}+m$$

and for

$$i_{H,erw} = i_{L,max} + m+1,...,n+2m$$

applies,

vii. back transformation of the broadened complex spectrum $F_{erw}$ into the time domain, wherein the back transformation preferably occurs via inverse discrete Fourier transformation or inverse fast Fourier transformation and

viii. demodulation of the back transformed broadened complex spectrum $F_{erw}$ using a broadened carrier frequency $f_{c,erw} =$

$f_c+m\Delta F$.

**9.** A method off optically surveying an object as claimed in Claim 8, **characterised in that** $m = rd[f_c/\Delta F]$ is selected, wherein rd [x] is the nearest whole number to x determined by rounding.

**10.** A method of optically surveying an objection as claimed in one of Claims 8 to 9, **characterised in that** the sampling duration is selected so that it is a whole number multiple of the periodic time $T_c$ of the carrier frequency, i.e. $T_s = N\ T_c = N/f_c$, wherein N is a natural number.

**11.** A method of optically surveying an object as claimed in one of Claims 8 to 10, **characterised in that** the resulting complex frequency response $G_{ch}(\omega)$ of the signal transmission chain from the detector to the digitalisation unit is compensated for by a digital filter, wherein advantageously this compensation can be effected with a discrete spectrum by a complex discrete frequency response $G_{komp}(\omega[i])=G_{komp}[i]$, which is so selected that the component multiplication with the complex discrete spectrum $G_{ch}[i]$ produces a vector with ones as inputs $G_{ch}[i]\ G_{komp}[i]=1$ or the back transformations of the frequency response $G_{komp}[i]$ is folded with the stored time signal of the detector signal.

## Revendications

**1.** Vibromètre destiné à la mesure optique de vibrations sur un objet (12), comprenant une source de rayonnement pour générer un faisceau d'origine, un diviseur de faisceau pour diviser le faisceau d'origine en un faisceau de mesure et un faisceau de référence (10), un dispositif optique de superposition pour superposer le faisceau de référence et un faisceau de mesure (9) réfléchi au moins partiellement par l'objet (12) et un détecteur,

le dispositif de superposition et le détecteur étant conçus pour coopérer de telle sorte que le faisceau de mesure (9) réfléchi au moins partiellement par l'objet (12) et le faisceau de référence (10) soient superposés sur le détecteur et

lequel vibromètre est réalisé sous la forme d'un vibromètre hétérodyne, avec une unité optique de décalage de fréquence qui est disposée dans le chemin optique du vibromètre, pour produire une fréquence porteuse par génération d'une différence de fréquence entre faisceau de mesure et de référence (10),

**caractérisé en ce**

**que** le diviseur de faisceau et l'unité de décalage de fréquence sont réalisés dans un composant optique sous la forme d'un modulateur acoustico-optique destiné à diffracter le faisceau d'origine,

le modulateur acoustico-optique étant réalisé de telle sorte que le faisceau d'origine (8) entrant dans le modulateur acoustico-optique puisse être divisé en au moins deux faisceaux diffractés :

> un premier faisceau diffracté d'ordre de diffraction 1 et
> un deuxième faisceau diffracté d'ordre de diffraction -1 et
> **que** le modulateur acoustico-optique est disposé dans le chemin optique du vibromètre de telle sorte que l'un des deux faisceaux diffractés soit le faisceau de mesure (9) et l'autre faisceau diffracté le faisceau de référence (10),
> **que** la source de rayonnement est réalisée de telle sorte qu'elle génère un faisceau monochromatique d'une longueur d'onde prédéfinie et
> **que** le modulateur acoustico-optique est réalisé de telle sorte que l'angle d'incidence optimal pour une intensité maximale du faisceau diffracté d'ordre 1 soit identique à l'angle d'incidence optimal pour une intensité maximale du faisceau diffracté d'ordre -1, au moins pour un faisceau incident ayant la longueur d'onde prédéfinie.

2. Vibromètre selon la revendication 1,
   **caractérisé en ce**
   **que** le modulateur acoustico-optique est réalisée sous la forme d'une cellule de Bragg à cisaillement lent (2).

3. Vibromètre selon l'une des revendications précédentes,
   **caractérisé en ce**
   **que** le vibromètre comprend une unité d'évaluation pour évaluer les signaux de mesure du détecteur, dans lequel l'unité d'évaluation comprend une unité de mémoire et une unité de numérisation qui est conçue pour coopérer avec le détecteur de telle sorte que les données de mesure du détecteur puissent être numérisées à une fréquence d'échantillonnage prédéfinie par l'unité de numérisation et mémorisées sous forme numérique dans l'unité de mémoire, en particulier que la fréquence d'échantillonnage est égale à au moins le double de la fréquence porteuse, en particulier au moins le quadruple, de préférence au moins le sextuple de la fréquence porteuse.

4. Vibromètre selon la revendication 3,
   **caractérisé en ce**
   **que** le vibromètre comprend une unité d'évaluation pour démoduler les données de mesure du détecteur, dans lequel l'unité de mémoire présente une sortie de données pour la sortie des données numériques mémorisées et l'unité d'évaluation présente une entrée de données pour l'entrée de données numériques et l'unité d'évaluation est conçue pour coopérer avec l'unité de mémoire pour la démodulation hors ligne des données de mesure numériques mémorisées.

5. Vibromètre selon l'une des revendications précédentes,
   **caractérisé en ce**
   **que** le vibromètre comprend au moins un piège à faisceau optique (11) qui est disposé dans le chemin optique du modulateur acoustico-optiques de telle sorte qu'un faisceau diffracté ou plusieurs faisceaux diffractés, à l'exception de ceux d'ordre 1 et d'ordre -1, soient absorbés par le piège à faisceau (11), en particulier le faisceau diffracté d'ordre 0.

6. Procédé de mesure optique d'un objet, comprenant les étapes suivantes :

> A génération d'un faisceau d'origine
> B division du faisceau d'origine en faisceau de référence et un faisceau de mesure (9) et génération d'une différence de fréquence entre faisceau de référence et de mesure
> C superposition du faisceau de référence et du faisceau de mesure réfléchi au moins partiellement par l'objet (12) sur un détecteur et
> D évaluation des données de mesure du détecteur

   **caractérisé en ce**
   **qu'**à l'étape B, la division du faisceau d'origine et la génération de la différence de fréquence sont effectuées au moyen d'un modulateur acoustico-optique de telle sorte que le faisceau d'origine (8) soit divisé au moins en deux faisceaux diffractés, à savoir un faisceau diffracté d'ordre 1 et un faisceau diffracté d'ordre - 1, l'un des deux faisceaux diffractés étant le faisceau de référence (10) et l'autre faisceau diffracté le faisceau de mesure (9),
   **que** le faisceau d'origine est généré au moyen d'une source de rayonnement qui est réalisée de telle sorte qu'elle génère un faisceau monochromatique d'une longueur d'onde prédéfinie et
   **qu'**un modulateur acoustico-optique est utilisé, qui est réalisé de telle sorte que l'angle d'incidence optimal pour une intensité maximale du faisceau diffracté d'ordre 1 soit identique à l'angle d'incidence optimal pour une intensité maximale du faisceau diffracté d'ordre -1, au moins pour un faisceau incident ayant la longueur d'onde prédéfinie et
   **qu'**à l'étape B est générée en outre, au moyen du modulateur acoustico-optique, la différence de fréquence entre faisceau de référence et de mesure (9).

7. Procédé selon la revendication 6,
   **caractérisé en ce**
   **qu'**à l'étape D, les données de mesure du détecteur sont numérisées et mémorisées sous forme numérique sur un support de mémoire, en particulier qu'à l'étape D, les données de mesure sont évaluées de telle sorte que les données de mesure mémorisées sous forme numérique soient lues et évaluées par une unité d'évaluation.

8. Procédé de mesure optique d'un objet, en particulier selon l'une des revendications 6 à 7, comprenant les étapes suivantes :

A génération d'un faisceau d'origine
B division du faisceau d'origine en faisceau de référence et un faisceau de mesure (9) et génération d'une différence de fréquence entre faisceau de référence et de mesure, qui correspond à une fréquence porteuse $f_C$ prédéfinie,
C superposition du faisceau de référence et du faisceau de mesure réfléchi au moins partiellement par l'objet (12) sur un détecteur et
D évaluation des données de mesure du détecteur

**caractérisé en ce**
**que** l'étape D comprend les étapes suivantes :

D1 échantillonnage du signal de mesure du détecteur à une fréquence d'échantillonnage $f_S$ prédéfinie, de sorte qu'un nombre prédéfini n de valeurs de mesure sont obtenues,
D2 mémorisation de chaque valeur de mesure $A[i]$ $(i = 1,2...n)$ du signal de mesure du détecteur sous forme numérique pour chaque valeur de mesure,
D3 détermination d'un spectre complexe $F[i]$ $(i = 1,2...n)$ au moyen d'une transformation de Fourier discrète ou d'une transformation de Fourier rapide à partir des valeurs de mesure mémorisées $A[i]$ $(i = 1,2...,n)$,
D4 détermination d'un spectre complexe étendu $F_{erw}[j]$, lequel présente pour un nombre prédéfini $m > 0$ au total $n+2m$ valeurs $(F_{erw}[j]; j = 1, 2...,n+2m)$, la détermination comprenant les étapes suivantes :

i. détermination de la résolution de fréquence, c.-à-d. de l'écart $\Delta F$ entre les raies de fréquence du spectre discret,
ii. détermination de l'indice $i_c$ de la fréquence porteuse $f_C$ dans le spectre complexe, c.-à-d. de l'indice pour lequel s'applique : $f_C = F[i_c]$ (aux éventuelles erreurs d'arrondi près lors de la détermination),
iii. définition de la fréquence porteuse dans le spectre étendu à l'indice $i_{c,erw} = ic+m$ : $F_{erw}[i_{c,erw}] = F[i_c]$,
iv. détermination des valeurs $F_{erw}[i]$ pour $F_{erw}[i_L+m] = F[i_L]$, où iL désigne tous les indices $2...(n+1)/2$ pour $n$ impair et $2...n/2+1$ pour $n$ pair,

v. détermination des valeurs $F_{erw}[i_{c,erw}-i]$ pour les indices $i=(1,2,...,i_{C,erw}-2)$, par $F_{erw}[i_{C,erw}-i]=-CC(F_{erw}[i_{C,erw}+i])$, où $-CC(x)$ désigne le conjugué complexe négatif d'un nombre complexe x,
vi. détermination des valeurs $F_{erw}[i_{H,erw}]$ par
$F_{erw}[i_{H,erw}] = F_{erw}[i_{L,max}+m-i_{L,erw}+1]$ pour $n+2m$ pair
et par
$F_{erw}[i_{H,erw}] = F_{erw}[i_{L,max}+m-i_{L,erw}+2]$ pour $n+2m$ impair,
où s'applique pour l'indice

$$i_{L,erw} = 2,3...i_{L,max} + m$$

et pour

$$i_{H,erw} = i_{L,max} + m + 1,...,n+2m,$$

vii. transformation inverse du spectre complexe étendu $F_{erw}$ dans le domaine temporel, la transformation inverse étant de préférence effectuée par la transformation de Fourier discrète inverse ou la transformation de Fourier rapide inverse et
viii. démodulation du spectre complexe étendu transformé inverse $F_{erw}$ en utilisant une fréquence porteuse étendue $f_{c,erw} = f_c+m\Delta F$.

9. Procédé de mesure optique d'un objet selon la revendication 8,
**caractérisé en ce**
**que** m est choisi = rd$[f_C/\Delta F]$, où rd [x] est le nombre entier le plus proche de x déterminé par arrondi.

10. Procédé de mesure optique d'un objet selon l'une des revendications 8 à 9,
**caractérisé en ce**
**que** la durée d'échantillonnage est choisie de telle sorte qu'elle soit égale à un multiple entier de la durée de période $T_C$ de la fréquence porteuse, c.-à-d. $T_S = N T_C = N/f_C$, où $N$ est un nombre naturel.

11. Procédé de mesure optique d'un objet selon l'une des revendications 8 à 10,
**caractérisé en ce**
**que** la réponse en fréquence complexe résultante $G_{ch}(\omega)$ de la chaîne de transmission de signaux du détecteur à l'unité de numérisation est compensée par un filtre numérique, cette compensation pouvant avantageusement, pour le spectre discret, se faire par une réponse en fréquence discrète complexe $G_{komp}(\omega[i])=G_{komp}[i]$ qui est choisie de sorte que la multiplication composante par composante avec le spectre discret complexe *Gch[i]* donne un vecteur avec des uns comme entrées $G_{ch}[i]G_{komp}[i]=1$ ou la transformée inverse de la réponse en fréquence $G_{komp}[i]$ est convoluée avec le signal temporel mémorisé du signal de détecteur.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6271924 B1

**In der Beschreibung aufgeführte Nicht-Patentliteratur**

- **T. YANO ; A. WATANABE.** Acoustooptic TeO2 tunable filter using far-off-axis anisotropic bragg difraction. *applied optics,* September 1976, vol. 15 (9
- **BARTEC RAJWA et al.** AOTF-bases system for image cytometry. *Proc. SPIE volume 5694-spectral imaging: instrumentation, applications and analysis III,* 2005
- **E. ORAN BRIGHAM.** FFT Schnell Fourier-Transformation. Verlag, 1989, 113-135
- Regelungstechnik. **OTTO FÖLLINGER.** Hüttig Buch. Verlag, 1994, 74